(19) Europäisches Patentamt
European Patent Office
Office européen des brevets

(11) **EP 2 863 539 A1**

(12) **EUROPEAN PATENT APPLICATION**

(43) Date of publication:
**22.04.2015 Bulletin 2015/17**

(51) Int Cl.:
***H02S 50/15*** *(2014.01)*  ***G01N 21/17*** *(2006.01)*

(21) Application number: **14187563.3**

(22) Date of filing: **02.10.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **11.10.2013 JP 2013213805**

(71) Applicant: **Yokogawa Electric Corporation Tokyo 180-8750 (JP)**

(72) Inventors:
• **Ito, Akishige**
  **Tokyo, 180-8750 (JP)**

• **Ishikawa, Masato**
  **Tokyo, 180-8750 (JP)**
• **Yanagisawa, Yoshiki**
  **Tokyo, 180-8750 (JP)**
• **Tsubota, Takashi**
  **Tokyo, 180-8750 (JP)**

(74) Representative: **Henkel, Breuer & Partner Patentanwälte**
  **Maximiliansplatz 21**
  **80333 München (DE)**

(54) **Photoelectric conversion element evaluation apparatus**

(57) A photoelectric conversion element evaluation apparatus includes: a probe light source (7) adapted to irradiate, with a probe light, a photoelectric conversion element that is an object to be measured (1); a pump light source (6) adapted to irradiate, with a pulse-like pump light, the photoelectric conversion element on which the probe light is irradiated; and a light receiving element (8) adapted to detect a time dependency of a change in a light amount of the probe light obtained via the photoelectric conversion element. This evaluation apparatus is able to evaluate the characteristic of the photoelectric conversion element in a non-contact manner. Therefore, this evaluation apparatus is able to properly determine the characteristic of the moving photoelectric conversion element without causing damage on it.

*FIG. 1*

EP 2 863 539 A1

# Description

## BACKGROUND

### 1. Technical Field

The present invention relates to a photoelectric conversion element evaluation apparatus, for example, an evaluation apparatus for photoelectric conversion elements in a production line process.

### 2. Related Art

In evaluation of a characteristic of a photoelectric conversion element (for example, a solar cell), a current-voltage characteristic of the solar cell is measured to calculate the maximum output power (Pmax) and a photoelectric conversion efficiency (PCE), as determination parameters. The photoelectric conversion efficiency is calculated by dividing the maximum output power by an artificial solar light irradiation output and a solar cell area.

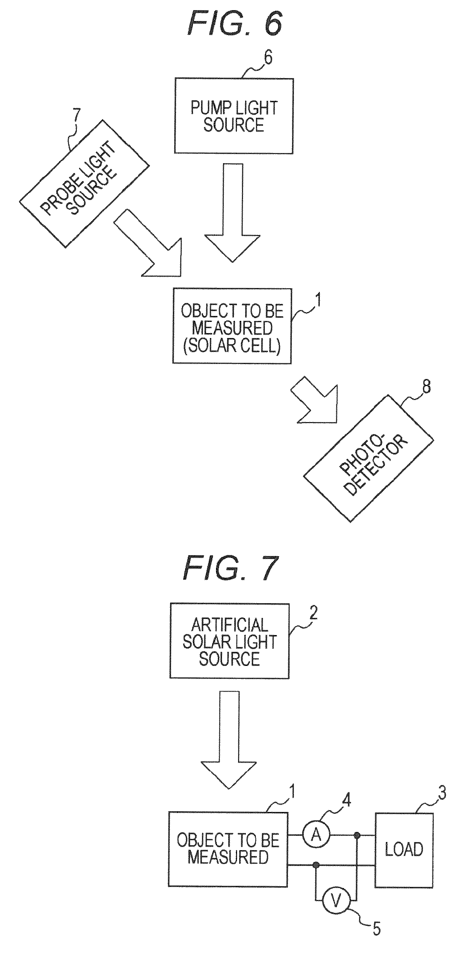

FIG. 7 is a block diagram illustrating an example of the conventional solar cell evaluation apparatus. A solar cell 1 is irradiated with an artificial solar light from an artificial solar light source 2. A load 3 is connected between the electrodes of the solar cell 1. An ammeter 4 is connected in series to the load 3. A voltmeter 5 is connected in parallel to the load 3.

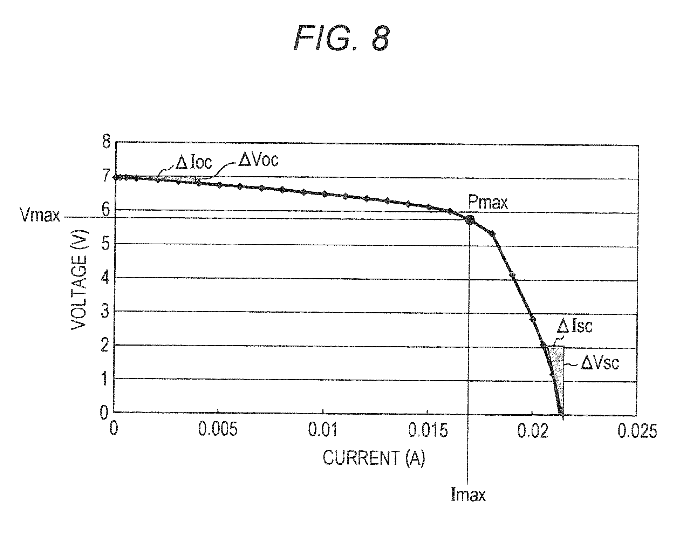

In the calculation of the maximum output power Pmax and the photoelectric conversion efficiency PCE of the solar cell 1, the solar cell 1 is irradiated with the artificial solar light from the artificial solar light source 2. In this state, the current is measured by the ammeter 4 and the voltage is measured by the voltmeter 5 while the load 3 connected between the electrodes of the solar cell 1 is changed. The current-voltage characteristic curve as illustrated in FIG. 8 is derived based on the measured result. The maximum output power Pmax and the photoelectric conversion efficiency PCE are calculated from this current-voltage characteristic curve.

In FIG. 8, ΔIoc represents a current reduction amount from a state where the circuit is opened. ΔVoc represents a voltage reduction amount from the state where the circuit is opened. A parallel resistance component Rsh inside the solar cell 1 can be derived by the following equation:

$$Rsh = -\Delta Voc / \Delta Ioc.$$

On the other hand, ΔIsc represents a current reduction amount when a state where the circuit is short-circuited is almost reached. ΔVsc represents a voltage reduction amount when the state where the circuit is short-circuited is almost reached. A series resistance component Rs inside the solar cell 1 can be derived by the following equation:

$$Rs = -\Delta Vsc / \Delta Isc.$$

The photoelectric conversion efficiency PCE can be derived by the following equation, where the maximum output power is denoted as Pmax, an irradiation power of the artificial solar light irradiated on the solar cell I from the artificial solar light source 2 is denoted as E, and an area of the solar cell 1 is denoted as A:

$$PCE = Pmax / (E \cdot A).$$

It is noted that the current at which the output is the maximum output power Pmax is denoted as the maximum output current Imax and the voltage at which the output is the maximum output power Pmax is denoted as the maximum output voltage Vmax.

JP-A-08-64652 discloses that an inspection method for evaluating a light emitting output and a response speed of a photoelectric conversion element that is still in an epitaxial wafer state.

By the way, a continuous production system called as roll-to-roll has been paid attention to as a manufacturing method of the solar cell. In this system, many solar cells are formed on a roll-state substrate sheet by using a printing technique. Then, the substrate sheet is sequentially wound while the solar cells are being formed.

In the conventional evaluation apparatus, however, the load 3 connected between the electrodes of the solar cell 1 is changed in the evaluation (see FIG. 7). Therefore, the solar cell and the load are electrically connected in the evaluation. It is thus difficult to apply the conventional evaluation apparatus to the roll-to-roll continuous production system.

That is, the solar cells that are the object to be measured and evaluated move on the production line without having the electrode in the intermediate phase of the production process. Therefore, it is practically difficult in this phase to cause the measuring probe pin to come into contact with the solar cells without causing damage on the solar cells.

Thus, conventionally, the quality of the solar cells produced by the roll-to-roll is determined after the solar cells have been formed on the entire roll-state substrate sheet.

Therefore, in the conventional evaluation apparatus, there is a concern that it is evaluated that all the solar cells formed on one roll-state substrate sheet are defective (in some case, the sheet has a total length of several 100 meters). Thus, it has been difficult for the conventional evaluation apparatus to suppress the manufacturing cost of the solar cells.

## SUMMARY

The present invention has been achieved in view of the above problems in the conventional art. One of the purposes of the present invention is to provide a photoelectric conversion element evaluation apparatus that is able to measure (or evaluate) a characteristic of a photoelectric conversion element produced by a roll-to-roll in a non-contact manner in a production line phase to properly evaluate (determine) the characteristic of the photoelectric conversion element in the production line phase without causing damage on the photoelectric conversion element.

A photoelectric conversion element evaluation apparatus according to an aspect of the present invention (the present evaluation apparatus) includes: a probe light source adapted to irradiate, with a probe light, a photoelectric conversion element that is an object to be measured; a pump light source adapted to irradiate, with a pulse-like pump light, the photoelectric conversion element on which the probe light is irradiated; and a light receiving element adapted to detect a time dependency of a change in a light amount of the probe light obtained via the photoelectric conversion element. The present evaluation apparatus is, for example, able to evaluate the characteristic of the photoelectric conversion element in a non-contact manner.

In the present evaluation apparatus, the photoelectric conversion element may be in a production line phase in which it is continuously produced by a roll-to-roll.

In the present evaluation apparatus, the probe light may have a pulse width that is wider than an irradiation period of the pump light.

In the present evaluation apparatus may further include: a data extraction unit adapted to extract a first change amount that is a change amount at a particular time of the probe light detected by the light receiving element and a second change amount that is a change amount after a certain time has elapsed of the probe light detected by the light receiving element; and a data determination unit adapted to estimate a photoelectric conversion efficiency of the photoelectric conversion element, based on a ratio or a difference between the first change amount and the second change amount.

The present evaluation apparatus is able to evaluate the characteristic of the photoelectric conversion element in a non-contact manner. Therefore, the present evaluation apparatus is able to properly evaluate (determine) the characteristic of the moving photoelectric conversion element without causing damage on it. For example, it is possible to early detect the defective element by applying the present evaluation apparatus to the production line of the photoelectric conversion element produced in the continuous production system by the roll-to-roll. As a result, the loss can be reduced to the minimum, that is, the yield rate can be improved.

## BRIEF DESCRIPTION OF DRAWINGS

FIG. 1 is a conceptual block diagram illustrating a photoelectric conversion element evaluation apparatus according to one embodiment of the present invention;
FIG. 2 is a conceptual diagram illustrating a carrier response to a pulse irradiation of the pump light;
FIG. 3 is a conceptual diagram illustrating a change amount of a probe light depending on the carrier response;
FIG. 4 is a schematic diagram of parameters for evaluating a characteristic of a solar cell;
FIG. 5A and FIG. 5B are exemplary diagrams of the characteristics measurement of the solar cell;
FIG. 6 is a conceptual block diagram illustrating a photoelectric conversion element evaluation apparatus according to another embodiment of the present invention;
FIG. 7 is a block diagram illustrating an example of a conventional solar cell evaluation apparatus; and
FIG. 8 is an exemplary diagram of a current-voltage characteristic curve in the conventional art.

## DETAILED DESCRIPTION OF THE EMBODIMENTS

In the following detailed description, for purpose of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

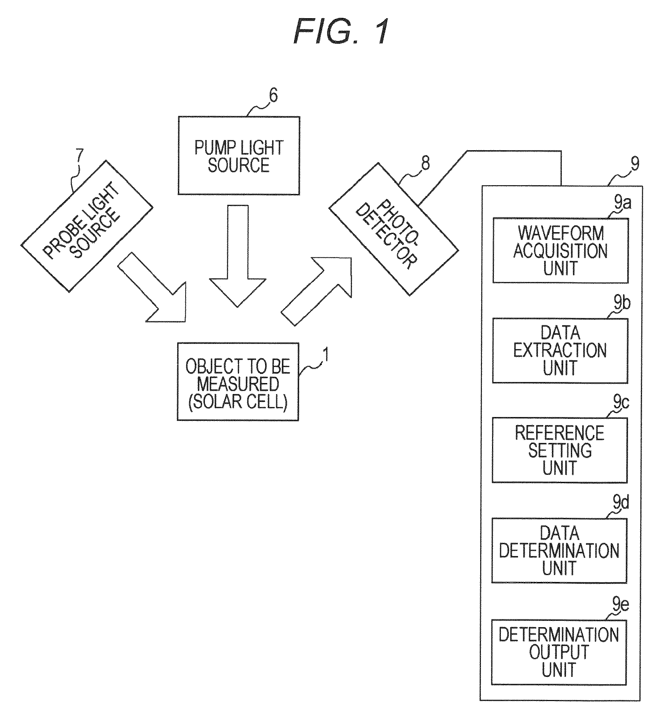

One embodiment of the present invention will be described below by using the drawings. FIG. 1 is a conceptual block diagram illustrating a photoelectric conversion element evaluation apparatus (the present evaluation apparatus) according to one embodiment of the present invention. As illustrated in FIG. 1, the present evaluation apparatus has a pump light source 6, a probe light source 7, a detector 8, and a signal processing unit 9.

The pump light source 6 irradiates a solar cell (a photoelectric conversion element) 1 with a pulse-like pump light. The pump light source 6 may be a nano-second pulse laser, for example.

The probe light source 7 continuously irradiates the solar cell 1 with a probe light. The probe light source 7 may be a semiconductor light emitting element, for example.

The detector 8 detects a change amount (an amount of a change in a light amount) of a reflected light of the probe light from the solar cell 1 (a probe reflected light) in real-time. That is, the detector 8 detects a time dependency of the change amount of the probe reflected light. The detector 8 may be a high speed photo-detector such as a photodiode, for example. The probe reflected light is a sort of the probe lights obtained via the solar cell 1 (the photoelectric conversion element).

The signal processing unit 9 has a waveform acquisition unit 9a, a data extraction unit 9b, a reference setting unit 9c, a data determination unit 9d, and a determination output unit 9e.

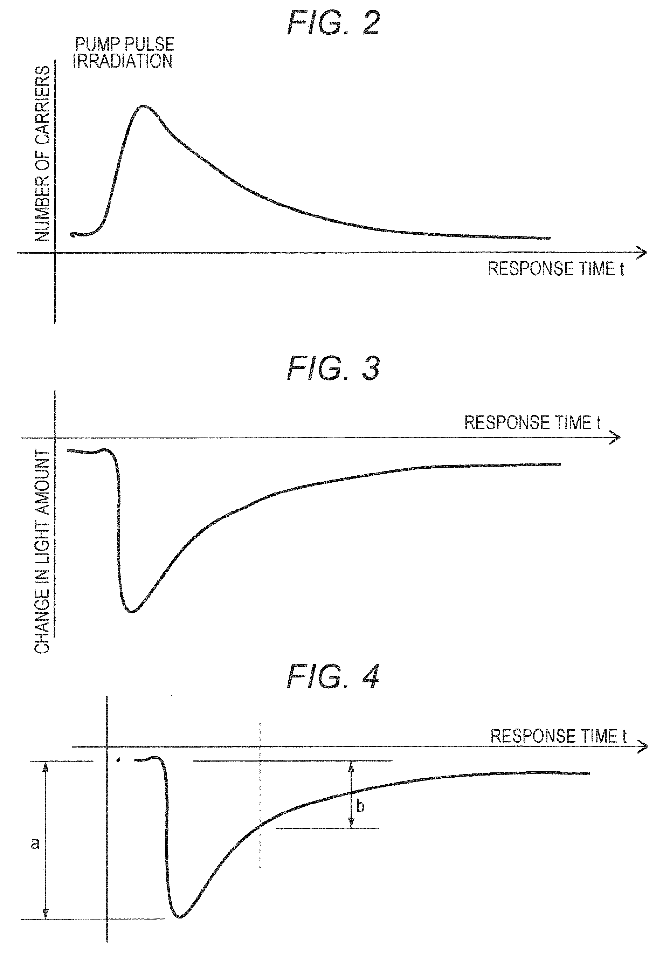

The waveform acquisition unit 9a in the signal processing unit 9 takes in a waveform of a change amount (a change in the light amount) of the probe reflected light depending on a carrier response as illustrated in FIG. 3. FIG. 3 will be described in detail later.

From the taken waveform as illustrated in FIG. 3, the data extraction unit 9b extracts a peak value "a" of the change amount and a change amount "b" at the time after a certain time has elapsed from the time of the peak value "a", as illustrated in FIG. 4. The peak value "a" and the change amount "b" will be described in detail later.

The reference setting unit 9c sets a predetermined reference value that will be a reference for determining the quality of the change amount "b" extracted by the data extraction unit 9b. Furthermore, the reference setting unit 9c can set a predetermined reference value that will be a reference for determining the quality of the solar cell 1.

The data determination unit 9d determines the quality of the change amount "b" extracted by the data extraction unit 9b, based on the reference value set by the reference setting unit 9c. Further, the data determination unit 9d is able to obtain the characteristic of the solar cell 1 (for example, a carrier generation and disappearance status, the photoelectric conversion efficiency, and an internal current leakage), based on the peak value "a" and/or the change amount "b" extracted by the data extraction unit 9b and/or the waveform of the change in the light amount taken by the waveform acquisition unit 9a. Furthermore, the data determination unit 9d is able to screen non-defective solar cells 1.

The determination output unit 9e outputs the quality determination result by the data determination unit 9d to the outside as the determination result of the solar cell 1 that is the object to be measured.

The evaluation process of the solar cell 1 by the present evaluation apparatus will be described below.

First, while the probe light source 7 continuously irradiates the solar cell 1 with the probe light, the pump light source 6 irradiates it with the pulse-like pump light. Thereby, the carrier generation and disappearance process as illustrated in FIG. 2 appears in the solar cell 1 due to the photoelectric conversion reaction. FIG. 2 is a conceptual diagram illustrating the carrier response to the pulse irradiation of the pump light. In FIG. 2, the vertical axis represents the number of carriers and the horizontal axis represents the response time (t).

The intensity (the amount of the light) of the probe reflected light detected in real-time by the detector 8 changes as seen in FIG. 3 because of the affection of an abnormality such as an optical absorption process depending on the carrier generation status of the solar cell 1. FIG. 3 is a conceptual diagram illustrating the change amount of the probe reflected light depending on the carrier response. In FIG. 3, the vertical axis represents the change amount of the probe reflected light and the horizontal axis represents the response time (t). The waveform acquisition unit 9a takes in the waveform of the change amount in the probe reflected light depending on the carrier response as illustrated in FIG. 3.

As is clear from the above, the carrier generation and disappearance status can be derived by detecting the change amount of the probe light in real-time to measure the temporal change of the number of carriers.

Specifically, the data determination unit 9d measures the temporal change in the number of carriers in the solar cell 1, based on the waveform of the change amount of the probe reflected light. This allows the data determination unit 9d to derive the carrier generation and disappearance status of the solar cell 1.

It is noted that the probe light is not limited to the continuous light but may be the pulse light. When the probe light is the pulse light, this probe light has a sufficiently wider pulse width than the pulse width (the irradiation period) of the pump light and has a stable light intensity during, before, and after the irradiation of the pump light. That is, the probe light may have a wider pulse width than the pump light irradiation period.

In the production phase of the continuous production process such as the roll-to-roll and the like, the solar cell 1 is in a moving state. In order to have the present evaluation apparatus adapted to such the continuous production process, it is desirable to reduce the evaluation time. Thus, the present evaluation apparatus does not use the method which acquires the carrier lifetime that is the general scheme for evaluating the temporal change of the carrier. In the present evaluation apparatus, in order to reduce the computing time, the data extraction unit 9b extracts the peak value of the change amount (the first change amount) "a" and the change amount (the second change amount) "b" at the time when a certain time has elapsed from the time of the peak value "a", as the parameters for the determination, as illustrated in FIG. 4. The peak value "a" and the change amount "b" are the parameters for evaluating the characteristic of the solar cell. FIG. 4 is a schematic diagram of the peak value "a" and the change amount "b".

In FIG. 4, the solar cell 1 whose peak value "a" is large and change amount "b" is large has a good efficiency as the solar cell and thus is a non-defective. With respect to the peak value "a", the fact that the peak value "a" corresponding to the number of generated carriers is large indicates that the number of generated carriers is large. The change amount "b" corresponds to the degree of the carrier disappearance. The fact that the change amount "b" is small indicates that many carriers have disappeared due to the leakage and other causes.

It is noted that, since the peak value "a" and the change amount "b" have appropriate values depending on the material and/or the process conditions, they are properly adjusted.

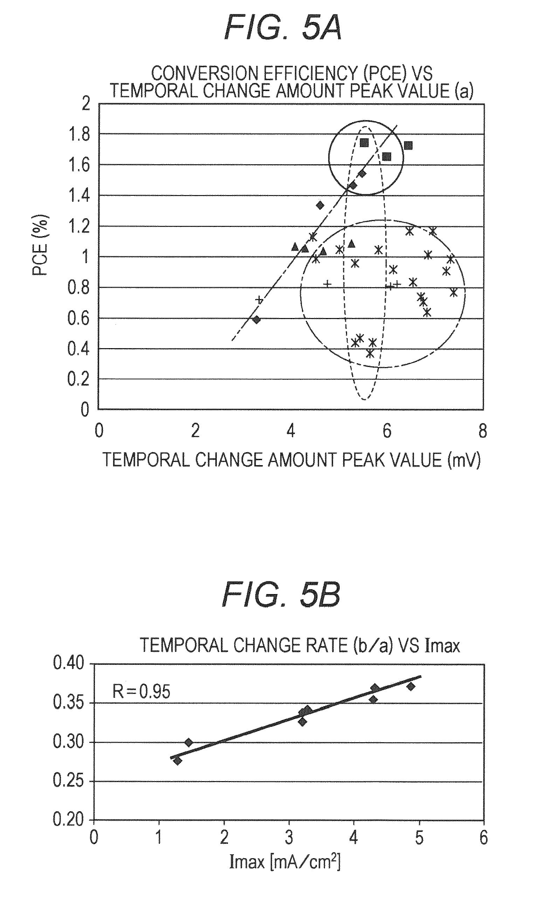

FIG. 5A and FIG. 5B are exemplary diagrams of the characteristic measurement of the solar cell 1. FIG. 5A illustrates the relationship between the photoelectric conversion efficiency and the peak value of the temporal change amount (the peak value "a"). FIG. 5B illustrates the relationship between the temporal change rate and the maximum conversion output current Imax. The photoelectric conversion efficiency of the solar cell 1 is primarily correlated with the number of the generated carriers. This correlation is illustrated as the dot-dashed straight line in FIG. 5A. When the photoelectric conversion efficiency of the solar cell 1 is out of this line, there may be some problem in the solar cell 1.

According to the dot-dashed straight line of FIG. 5A, for example, when the peak value "a" is 4 mV or greater, the photoelectric conversion efficiency PCE is 1 % or higher. In practice, however, such a measurement result that the conversion efficiency is bad in spite of the high peak value "a" (there being sufficient carriers) may be obtained as indicated by the circle portion with the dot-dashed line that is deviated from the dot-dashed straight line. This is considered to be caused by the fact that the carriers do not make a current due to the internal leakage and other causes, that is, Imax is poor.

In focusing on the sample data surrounded by the elliptical dashed line in FIG. 5A where the peak value "a" that is the change amount corresponding to the number of the generated carriers is around 5.5 mV, it is found that there is a high correlation between the value of Imax and the value of b/a (the temporal change rate) as illustrated in FIG. 5B when the change amount "b" at the time when a certain time has elapsed from the time of the peak value is evaluated at the point of 100 nsec. That is, the solar cell 1 having a large b/a has a large photoelectric conversion efficiency. Therefore, with the b/a being set to be greater than or equal to 0.35, the non-defective included in the circle with the solid line of FIG. 5A only can be screened from the solar cells 1 corresponding to the range of the dashed line of FIG. 5A.

Specifically, in the present evaluation apparatus, the data determination unit 9d estimates, based on the b/a, the photoelectric conversion efficiency in the solar cell 1 and screens the solar cells 1 having a high photoelectric conversion efficiency.

For example, the reference setting unit 9c sets the reference that the b/a is greater than or equal to 0.35. Based on this reference, the data determination unit 9d then screens the solar cells I having the good b/a (the non-defective solar cells 1), for example. That is, the data determination unit 9d screens the solar cells corresponding to the sample data whose b/a is greater than or equal to 0.35. This allows for screening the non-defective included in the circle with the solid line of FIG. 5A from the solar cells 1 corresponding to the sample data included in the range of the dashed line of FIG. 5A.

Then, the determination output unit 9e outputs the information of the non-defective solar cell 1 (that is, having a high photoelectric conversion efficiency) or the information of the defective solar cell 1 (that is, having a low photoelectric conversion efficiency) to the outside via a monitor.

Further, the data determination unit 9d estimates the amount of the internal current leakage of the solar cell 1, based on the peak value "a" and the change amount "b". That is, for example, the data determination unit 9d estimates that the solar cell 1 whose peak value "a" is greater than a predetermined value and change amount "b" is smaller than a predetermined value is the solar cell 1 having a large internal current leakage. Alternatively, the data determination unit 9d may estimate the amount of the internal current leakage of the solar cell 1, based on the change amount "b". That is, for example, the data determination unit 9d may estimate that the solar cell 1 whose change amount "b" is smaller than a predetermined value is the solar cell 1 having a large internal current leakage.

As set forth, in the present evaluation apparatus, it is not the lifetime evaluation but the spot evaluation using the peak value "a" and the change amount "b" (that is, the spot evaluation temporarily focusing on two points) that is introduced as the determination scheme. This allows for significantly reducing the computing time and supporting the high speed measurement.

Further, in the present evaluation apparatus, the affection of the internal current leakage can be estimated, which makes it possible to remove the solar cell 1 which is likely to be deteriorated early in the future.

Further, in the present evaluation apparatus, the temporal change of the number of carriers is measured by detecting the change amount of the probe light in real-time. This allows the present evaluation apparatus to derive the carrier generation and disappearance status.

Further, in the above-described embodiment, the data determination unit 9d determines the quality of the solar cell 1, based on the ratio between the peak value "a" and the change amount "b" (b/a; the temporal change rate). Without being limited to it, the data determination unit 9d may determine the quality of the solar cell 1, based on the difference in the change amount (or the difference between the peak value "a" and the change amount "b").

It is noted that the measurement system (the detector 8) is not limited to the equipment for measuring the reflected light as in the embodiment. As illustrated in FIG. 6, the pump light source 6 and probe light source 7 and the photo-detector 8 may be arranged opposed to each other so as to interpose the solar cell 1 that is the object to be measured. In this case, the detector 8 measures the change amount (the change in the light amount) of the probe light transmitting through the solar cell 1 (the probe transmission light). The probe transmission light is a sort of the probe lights obtained via the solar cell 1 (the photoelectric conversion element).

Furthermore, in the above-described embodiment, the example of measuring the characteristic of the solar cell 1 has been described. Without being limited to it, the present evaluation apparatus is applicable to the characteristic measurement of other photoelectric conversion elements.

As described above, the present evaluation apparatus is able to evaluate the characteristic of the photoelectric conversion element in a non-contact manner. Therefore, the present evaluation apparatus is able to properly evaluate (determine) the characteristic of the moving photoelectric conversion element without causing damage on it. For example, it is possible to early detect the defective element by applying the present evaluation apparatus to the production line of the photoelectric conversion element produced in the continuous production system by the roll-to-roll. As a result, the loss can be reduced to the minimum, that is, the yield rate can be improved.

It is noted that the detector 8 may be one adapted to detect in real-time the change amount of the probe light irradiated on the solar cell 1 and, for example, the high speed photo-detector such as the photodiode may be used.

In the case where the dot-dashed straight line of FIG. 5A is used, when the value "a" is set to 4 mV or greater as an example of the determination, those having the PCE of 1% or greater can be screened.

In the present embodiment, the peak value "a" of the change amount and the change amount "b" at the time when a certain time has elapsed from the time of the peak value "a" may be used as the determination reference.

Further, the photoelectric conversion element evaluation apparatus according to one embodiment of the present invention may be the following first to fourth photoelectric conversion element evaluation apparatus.

The first photoelectric conversion element evaluation apparatus is a photoelectric conversion element evaluation apparatus for evaluating a photoelectric conversion element in a non-contact manner, and the apparatus includes a probe light source adapted to irradiate with a probe light a photoelectric conversion element that is an object to be measured; a pump light source adapted to irradiate with a pulse-like pump light the photoelectric conversion element on which the probe light is irradiated; and a light receiving element adapted to detect a time dependency of a change in a light amount of the probe light irradiated on the photoelectric conversion element.

In the second photoelectric conversion element evaluation apparatus in the first photoelectric conversion element, the photoelectric conversion element is one in a production line phase in which it is continuously produced by a roll-to-roll.

In the third photoelectric conversion element evaluation apparatus in the first or second photoelectric conversion element evaluation apparatus, the probe light has a pulse width including an irradiation period and periods before and after thereof of the pump light.

The fourth photoelectric conversion element evaluation apparatus in the first to third photoelectric conversion element evaluation apparatus estimates at least one of a maximum value of a photoelectric conversion efficiency and a status determination of an element internal current leakage, based on a determination reference that is either a ratio or a difference between a change amount at a particular time detected by irradiating a pulse-like pump light while continuously irradiating a probe light to the photoelectric conversion element and a change amount detected when a certain time has elapsed.

These allow for the proper evaluation and determination of the characteristic without causing damage on the photoelectric conversion element in the production line phase of the continuous production system by the roll-to-roll because of the non-contacting measurement, so that the loss can be reduced to the minimum by the early detection of the defective elements and thus the yield rate can be improved.

The foregoing detailed description has been presented for the purposes of illustration and description. Many modifications and variations are possible in light of the above teaching. It is not intended to be exhaustive or to limit the subject matter described herein to the precise form disclosed. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims appended hereto.

**Claims**

1. A photoelectric conversion element evaluation apparatus comprising:

   a probe light source adapted to irradiate, with a probe light, a photoelectric conversion element that is an object to be measured;
   a pump light source adapted to irradiate, with a pulse-like pump light, the photoelectric conversion element on which the probe light is irradiated; and
   a light receiving element adapted to detect a time dependency of a change in a light amount of the probe light obtained via the photoelectric conversion element.

2. The photoelectric conversion element evaluation apparatus according to claim 1, wherein the photoelectric conversion element is in a production line phase in which it is continuously produced by a roll-to-roll.

3. The photoelectric conversion element evaluation apparatus according to claim 1 or 2, wherein the probe light has a pulse width that is wider than an irradiation period of the pump light.

4. The photoelectric conversion element evaluation apparatus according to any one of claims 1 to 3 further comprising:

   a data extraction unit adapted to extract a first change amount that is a change amount at a particular time of the probe light detected by the light receiving element and a second change amount that is a change amount after a certain time has elapsed of the probe light detected by the light receiving element; and
   a data determination unit adapted to estimate a photoelectric conversion efficiency of the photoelectric conversion element, based on a ratio or a difference between the first change amount and the second change amount.

5. The photoelectric conversion element evaluation apparatus according to claim 4, wherein the data determination unit is adapted to estimate an internal current leakage amount of the photoelectric conversion element, based on the first and second change amounts.

# FIG. 1

6

PUMP LIGHT
SOURCE

7

PROBE LIGHT
SOURCE

8

PHOTO-
DETECTOR

9

9a

WAVEFORM
ACQUISITION
UNIT

9b

DATA
EXTRACTION
UNIT

9c

REFERENCE
SETTING
UNIT

9d

DATA
DETERMINATION
UNIT

9e

DETERMINATION
OUTPUT
UNIT

1

OBJECT TO BE
MEASURED
(SOLAR CELL)

## FIG. 2

## FIG. 3

## FIG. 4

## FIG. 5A

CONVERSION EFFICIENCY (PCE) VS
TEMPORAL CHANGE AMOUNT PEAK VALUE (a)

PCE (%)

TEMPORAL CHANGE AMOUNT PEAK VALUE (mV)

## FIG. 5B

TEMPORAL CHANGE RATE (b/a) VS Imax

R = 0.95

Imax [mA/cm²]

## FIG. 6

6

PUMP LIGHT
SOURCE

7

PROBE LIGHT
SOURCE

1

OBJECT TO BE
MEASURED
(SOLAR CELL)

8

PHOTO-
DETECTOR

## FIG. 7

2

ARTIFICIAL
SOLAR LIGHT
SOURCE

1

OBJECT TO BE
MEASURED

4

A

3

LOAD

V

5

# FIG. 8

Europäisches
Patentamt

European
Patent Office

Office européen
des brevets

# EUROPEAN SEARCH REPORT

Application Number

EP 14 18 7563

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ASCÁZUBI RICARDO ET AL: "Ultrafast recombination in Si-doped InN", APPLIED PHYSICS LETTERS, AMERICAN INSTITUTE OF PHYSICS, US, vol. 88, no. 11, 16 March 2006 (2006-03-16), pages 112111-112111, XP012080582, ISSN: 0003-6951, DOI: 10.1063/1.2185407 * the whole document * | 1-5 | INV. H02S50/15 G01N21/17 |
| X | TSAI TSONG-RU ET AL: "Spectral dependence of time-resolved photoreflectance of InN epitaxial films", APPLIED PHYSICS LETTERS, AMERICAN INSTITUTE OF PHYSICS, US, vol. 95, no. 14, 9 October 2009 (2009-10-09), pages 142108-142108, XP012125953, ISSN: 0003-6951, DOI: 10.1063/1.3246156 * the whole document * | 1,2,4,5 | |
| X | JIAN-SHEN YU ET AL: "Spectral Dependence of Time-Resolved Photoreflectance of Low-Temperature-Grown GaAs", JAPANESE JOURNAL OF APPLIED PHYSICS, vol. 36, no. Part 1, No. 4A, 15 April 1997 (1997-04-15), pages 2144-2150, XP055176550, ISSN: 0021-4922, DOI: 10.1143/JJAP.36.2144 * page 2144, left-hand column, paragraph 1 - page 2145, left-hand column, last paragraph; figure 2 * | 1,2,4,5 | TECHNICAL FIELDS SEARCHED (IPC)<br><br>G01R H02S G01N |
| X | WO 99/13318 A1 (UNIV BROWN RES FOUND [US]) 18 March 1999 (1999-03-18) * abstract; figures 1A, 6A, 6B * | 1-5 | |

-/--

The present search report has been drawn up for all claims

| Place of search | Date of completion of the search | Examiner |
|---|---|---|
| Berlin | 16 March 2015 | Ernst, Monika |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 14 18 7563

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | David Fuertes Marrón ET AL: "Application of photoreflectance to advanced multilayer structures for photovoltaics", , 4 December 2012 (2012-12-04), pages 1-28, XP055176794, Internet Retrieved from the Internet: URL:http://arxiv.org/ftp/arxiv/papers/1212 /1212.0680.pdf [retrieved on 2015-03-16] * abstract; figure 2 * | 1-5 | |
| X | SHI Z Q ET AL: "Electrical characterization of ITO/p-InP solar cells", PROCEEDINGS OF THE PHOTOVOLTAIC SPECIALISTS CONFERENCE. LOUISVILLE, MAY 10 - 14, 1993; [PROCEEDINGS OF THE PHOTOVOLTAIC SPECIALISTS CONFERENCE], NEW YORK, IEEE, US, vol. CONF. 23, 10 May 1993 (1993-05-10), pages 1432-1436, XP010113133, DOI: 10.1109/PVSC.1993.346906 ISBN: 978-0-7803-1220-3 * abstract * * Section "Photoreflectance Spectroscopy" * | 1-5 | |
| A | US 2013/122612 A1 (REPINS INGRID L [US] ET AL) 16 May 2013 (2013-05-16) * abstract; figures 4-7 * | 1-5 | |
| A | US 6 373 069 B1 (AKAIKE YASUHIKO [JP] ET AL) 16 April 2002 (2002-04-16) * abstract; figures 4-10 * | 1-5 | |

TECHNICAL FIELDS SEARCHED (IPC)

-/--

The present search report has been drawn up for all claims

| Place of search | Date of completion of the search | Examiner |
|---|---|---|
| Berlin | 16 March 2015 | Ernst, Monika |

EPO FORM 1503 03.82 (P04C01)

Europäisches
Patentamt

European
Patent Office

Office européen
des brevets

## EUROPEAN SEARCH REPORT

Application Number

EP 14 18 7563

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2011/234790 A1 (TRUE BRUCE [US]) 29 September 2011 (2011-09-29) * abstract; figures 2A-C, 3, 10 * ----- | 1-5 | |
| A | EP 2 159 583 A1 (ODERSUN AG [DE]) 3 March 2010 (2010-03-03) * abstract * ----- | 1-5 | |

TECHNICAL FIELDS
SEARCHED      (IPC)

The present search report has been drawn up for all claims

| Place of search | Date of completion of the search | Examiner |
|---|---|---|
| Berlin | 16 March 2015 | Ernst, Monika |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT**
**ON EUROPEAN PATENT APPLICATION NO.** EP 14 18 7563

This annex lists the patent family members relating to the patent documents cited in the above-mentioned European search report.
The members are as contained in the European Patent Office EDP file on
The European Patent Office is in no way liable for these particulars which are merely given for the purpose of information.

16-03-2015

| Patent document cited in search report | | | Publication date | Patent family member(s) | | | Publication date |
|---|---|---|---|---|---|---|---|
| WO 9913318 | | A1 | 18-03-1999 | DE | 19882660 | B4 | 29-01-2009 |
| | | | | DE | 19882660 | T1 | 20-06-2002 |
| | | | | TW | 447062 | B | 21-07-2001 |
| | | | | WO | 9913318 | A1 | 18-03-1999 |
| US 2013122612 | | A1 | 16-05-2013 | NONE | | | |
| US 6373069 | | B1 | 16-04-2002 | JP | 2000101145 | A | 07-04-2000 |
| | | | | TW | 494581 | B | 11-07-2002 |
| | | | | US | 6373069 | B1 | 16-04-2002 |
| US 2011234790 | | A1 | 29-09-2011 | CN | 102859338 | A | 02-01-2013 |
| | | | | EP | 2553407 | A1 | 06-02-2013 |
| | | | | JP | 2013524217 | A | 17-06-2013 |
| | | | | SG | 183979 | A1 | 30-10-2012 |
| | | | | US | 2011234790 | A1 | 29-09-2011 |
| | | | | WO | 2011123469 | A1 | 06-10-2011 |
| EP 2159583 | | A1 | 03-03-2010 | AU | 2009286726 | A1 | 04-03-2010 |
| | | | | CN | 102197311 | A | 21-09-2011 |
| | | | | EP | 2159583 | A1 | 03-03-2010 |
| | | | | JP | 2012501085 | A | 12-01-2012 |
| | | | | US | 2011156716 | A1 | 30-06-2011 |
| | | | | WO | 2010023263 | A1 | 04-03-2010 |

EPO FORM P0459

For more details about this annex : see Official Journal of the European Patent Office, No. 12/82

**EP 2 863 539 A1**

## REFERENCES CITED IN THE DESCRIPTION

### Patent documents cited in the description

- JP 8064652 A